# EUROPÄISCHE PATENTANMELDUNG

(11) **EP 3 459 709 A1**
(43) Veröffentlichungstag der Anmeldung: **27.03.2019**
(21) Anmeldenummer: 17193121.5
(22) Anmeldetag: 26.09.2017
(51) Int. Cl.: B29C 49/04, B60K 15/03

(54) **KUNSTSTOFFTANK**

(71) Anmelder: Magna Steyr Fuel Systems GesmbH, 8261 Sinabelkirchen (AT)
(72) Erfinder: KAHLER, Bernd, 8010 Graz (AT); PUCHLEITNER, Rainer, 8052 Graz (AT); HUMENBERGER, Harald, 8181 St. Ruprecht (AT)
(74) Vertreter: Zangger, Bernd

(57) **Zusammenfassung**

Ein Kunststofftank für ein Kraftfahrzeug, umfassend eine Tankschale mit mehreren Schichten, wobei die mehreren Schichten umfassen: zumindest eine Schicht aus HDPE (1.1, 1.2), zumindest eine Barriereschicht (2) und zumindest eine Regranulat-Schicht (3.1, 3.2), wobei die Regranulat-Schicht (3.1, 3.2) und/oder die HDPE-Schicht (1.1, 1.2) kugelförmige oder faserförmige Füllstoffe (4) enthält, sowie ein Verfahren zur Herstellung eines solchen Kunststofftanks.

## Beschreibung

### Gebiet der Erfindung

Die vorliegende Erfindung betrifft einen Kunststofftank für ein Kraftfahrzeug und ein Verfahren zur Herstellung eines solchen Kunststofftanks für ein Kraftfahrzeug.

### Stand der Technik

Kunststofftanks für Kraftfahrzeuge werden heutzutage häufig als Kraftstofftanks eingesetzt, also zur Aufnahme des Kraftstoffes zum Betreiben des Kraftfahrzeuges.

Da derartige Kunststofftanks verschiedenen mechanischen und chemischen Anforderungen genügen müssen, ist es bereits bekannt, Kunststofftanks mit Tankschalen auszustatten, die aus mehreren Schichten verschiedener Materialien bestehen.

Insbesondere kann beispielsweise eine Barriereschicht zur Reduktion des Durchtritts von Kohlenwasserstoffen verwendet werden. Eine solche Barriereschicht kann beispielsweise als innere Schicht einer Tankschale ausgebildet sein und aus Ethylen-Vinylalkohol-Copolymer (EVOH) bestehen.

Es ist auch bereits bekannt dass Kunststoff nicht nur in neu hergestellter, primärer Form genutzt werden kann, sondern auch in wiederaufbereiteter recycelter Form, als sogenanntes "Regranulat" oder englisch "Regrind". Dabei werden Kunststoffabfälle bzw. Kunststoffreste, die oft in Form eines Gemisches verschiedener Kunststoffe vorliegen, zu einem Mahlgut, dem Regranulat, vermahlen und in dieser granularen Form einem weiteren Verarbeitungsprozess, insbesondere Produktionsprozess, zugeführt.

Die Verwendung derartiger Regranulate ist aus ökologischer Sicht auch für Kunststofftanks der oben beschriebenen Art wünschenswert, jedoch können Tankschalen aus Regranulat kaum die für einen Kraftstofftank in einem Fahrzeug erforderlichen Eigenschaften, insbesondere hinsichtlich Druck- und Temperaturstabilität, aufweisen.

### Zusammenfassung der Erfindung

Es ist eine Aufgabe der Erfindung, Kunststofftanks für Kraftfahrzeuge in dieser Hinsicht zu verbessern und insbesondere einen Kunststofftank anzugeben, der gute mechanische und chemische Eigenschaften aufweist und dabei ökologisch und ökonomisch hergestellt werden kann.

Eine weitere Aufgabe der Erfindung ist es ein entsprechendes Verfahren zur Herstellung des Kunststofftanks anzugeben.

Die Lösung der Aufgabe erfolgt durch einen Kunststofftank für ein Kraftfahrzeug, umfassend eine Tankschale mit mehreren Schichten, wobei die mehreren Schichten umfassen: zumindest eine Schicht aus High Density Polyethylene (HDPE), zumindest eine Barriereschicht und zumindest eine Regranulat-Schicht, wobei die Regranulat-Schicht und/oder die HDPE-Schicht kugelförmige oder faserförmige Füllstoffe enthält.

Erfindungsgemäß wird ein Kunststofftank mehrschichtig aufgebaut, wobei die Basis des Tanks und des Herstellungsverfahren im Wesentlichen High Density Polyethylene, also HDPE, ist. Zusätzlich zu einer Barriereschicht für Kohlenwasserstoffe wird erfindungsgemäß eine Regranulat-Schicht eingesetzt, also eine Schicht aus einem wiederverwerteten Kunststoff, insbesondere Kunststoffgemisch, dass zu einem Kunststoffgranulat vermahlen wurde und in dieser Form zu einer Schicht der Tankschale des Kunststofftanks verarbeitet wird.

Um trotz an sich mäßig geeigneter Eigenschaften des Regranulats die erforderliche mechanische Stabilität der Tankschale zu erreichen, wird ein Regranulat mit kugelförmigen oder faserförmigen Füllstoffen eingesetzt. Alternativ oder zusätzlich können auch der primären HDPE-Schicht kugelförmige oder faserförmige Füllstoffe beigegeben sein um für den gesamten Schichtaufbau der Tankschale die gewünschten mechanischen Eigenschaften zu erreichen.

Das Regranulat kann insbesondere selbst wieder aus Produktionsresten des selben mehrschichtigen Kunststofftanks hergestellt sein. Insbesondere kann das Regranulat daher einen hohen Anteil von HDPE umfassen, kann selbst zusätzlich zum primären HDPE aus Regranulat gewonnen sein und kann das Regranulat EVOH aus einer Barriereschicht umfassen.

Vorzugsweise umfasst die Tankschale von innen nach außen: eine Schicht aus HDPE, eine Regranulat-Schicht, eine Barriereschicht, eine weitere Regranulat-Schicht, eine weitere Schicht aus HDPE. Dabei enthält die weitere Regranulat-Schicht bevorzugt, ebenso wie die Regranulat-Schicht, kugelförmige oder faserförmige Füllstoffe. Alternativ oder zusätzlich kann auch die weitere HDPE-Schicht kugelförmige oder faserförmige Füllstoffe enthalten.

Die Füllstoffe können insbesondere sein oder umfassen: Glaskugeln, Perlit und/oder Glasfasern.

Bevorzugt ist die Barriereschicht mittels einer Haftvermittler-Schicht mit der Regranulat-Schicht verbunden. Wenn eine weitere Regranulat-Schicht vorhanden ist, ist auch diese vorzugsweise über eine Haftvermittler-Schicht mit der Barriere-Schicht verbunden.

Ein Verfahren zur Herstellung eines solchen Kunststofftanks für ein Kraftfahrzeug umfasst vorzugsweise den Verfahrensschritt, dass die Regranulat-Schicht mit Hilfe eines Extruders aus einem Regranulat-Material, also aus einem recycelten Kunststoffgranulat, erstellt wird.

Bevorzugt werden die Füllstoffe dem Regranulat-Material vor der Extrusion zugemischt und anschließend das Regranulat-Material, bereits umfassend die Füllstoffe, dem Extruder zugeführt.

In einer anderen bevorzugten Ausführungsform werden die Füllstoffe durch einen Kanal des Extruders, insbesondere Farbkanal, während der Extrusion dem Regranulat-Material zugeführt.

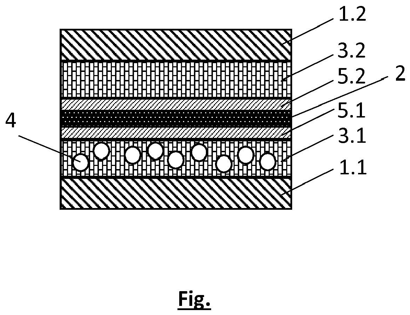

### Kurzbeschreibung der Zeichnung

Die Erfindung wird im Folgenden beispielhaft unter Bezugnahme auf die Zeichnung beschrieben.
- Fig.: ist eine schematische Schnittansicht der Tankschale eines erfindungsgemäßen Kunststofftanks.

### Detaillierte Beschreibung der Erfindung

In Fig. ist ein erfindungsgemäßer mehrschichtiger Kunststofftank für ein Kraftfahrzeug dargestellt. Die Tankschale des Kunststofftanks weist mehrere Schichten auf, nämlich von innen (in Fig. unten dargestellt) nach außen (in Fig. oben dargestellt) eine Schicht aus HDPE 1.1, eine Regranulat-Schicht 3.1, eine Haftvermittler-Schicht 5.1, eine Barriereschicht 2, insbesondere EVOH, eine weitere Haftvermittler-Schicht 5.2, eine weitere Regranulat-Schicht 3.2 und eine weitere Schicht aus HDPE 1.2.

Erfindungsgemäß enthält die Regranulat-Schicht 3.1 kugelförmige oder faserförmige Füllstoffe 4, insbesondere Glaskugeln, Perlit und/oder Glasfasern. Vorzugsweise kann auch die weitere Regranulat-Schicht 3.2 derartige Füllstoffe 4 enthalten. Ebenso können auch eine oder beide der HDPE-Schichten 1.1, 1.2 die selben Füllstoffe 4 enthalten.

Der Anteil der Füllstoffe in einer Schicht, insbesondere in der Regrind Schicht 3.1 oder 3.2 kann zwischen 1 % und 80 %, insbesondere bei 10 % bis 50 % liegen.

Die Schichtdicken können vorzugsweise so aufgeteilt sein, dass die HDPE-Schichten 1.1 und 1.2 jeweils etwa 22 % der Tankschalendicke einnehmen, die Regranulat-Schichten 3.1 und 3.2 jeweils etwa 25 % der Tankschalendicke, die Barriereschicht 2 etwa 3 % und die Haftvermittler-Schichten 5.1 und 5.2 jeweils etwa 1,5 % der Tankschalendicke.

### Bezugszeichenliste

- 1.1, 1.2: HDPE-Schicht
- 2: Barriereschicht
- 3.1, 3.2: Regranulat-Schicht
- 4: Füllstoffe
- 5.1, 5.2: Haftvermittler-Schicht

## Patentansprüche

1. Kunststofftank für ein Kraftfahrzeug, umfassend eine Tankschale mit mehreren Schichten, wobei die mehreren Schichten umfassen: zumindest eine HDPE-Schicht (1.1, 1.2), zumindest eine Barriereschicht (2) und zumindest eine Regranulat-Schicht (3.1, 3.2), wobei die Regranulat-Schicht (3.1, 3.2) und/oder die HDPE-Schicht (1.1, 1.2) kugelförmige oder faserförmige Füllstoffe (4) enthält.

2. Kunststofftank nach Anspruch 1,
**dadurch gekennzeichnet, dass** die Tankschale von innen nach außen umfasst: eine HDPE-Schicht (1.1), eine Regranulat-Schicht (3.1), eine Barriereschicht (2), eine weitere Regranulat-Schicht (3.2), eine weitere HDPE-Schicht (1.2), wobei bevorzugt die weitere Regranulat-Schicht (3.2) ebenso wie die Regranulat-Schicht (3.1) kugelförmige oder faserförmige Füllstoffe (4) enthält und/oder die weitere HDPE-Schicht (1.2) ebenso wie die HDPE-Schicht (1.1) kugelförmige oder faserförmige Füllstoffe (4) enthält.

3. Kunststofftank nach zumindest einem der vorhergehenden Ansprüche,
**dadurch gekennzeichnet, dass** die Barriereschicht (2) mittels einer Haftvermittler-Schicht (5.1, 5.2) mit der Regranulat-Schicht (3.1, 3.2) verbunden ist.

4. Kunststofftank nach zumindest einem der vorhergehenden Ansprüche,
**dadurch gekennzeichnet, dass** die Füllstoffe (4) Glaskugeln, Perlit und/oder Glasfasern umfassen.

5. Verfahren zur Herstellung eines Kunststofftanks für ein Kraftfahrzeug nach zumindest einem der vorhergehenden Ansprüche, umfassend den Verfahrensschritt dass die Regranulat-Schicht (3.1, 3.2) mit Hilfe eines Extruders aus einem Regranulat-Material, also aus einem recycelten Kunststoffgranulat, erstellt wird.

6. Verfahren zur Herstellung eines Kunststofftanks nach Anspruch 5,
**dadurch gekennzeichnet, dass** die Füllstoffe (4) dem Regranulat-Material vor der Extrusion zugemischt werden und anschließend das Regranulat-Material umfassend die Füllstoffe (4) dem Extruder zugeführt wird.

7. Verfahren zur Herstellung eines Kunststofftanks nach Anspruch 5,
**dadurch gekennzeichnet, dass** die Füllstoffe (4) durch einen Kanal des Extruders, insbesondere Farbkanal, während der Extrusion dem Regranulat-Material zugeführt werden.
